Europäisches Patentamt

European Patent Office

Office européen des brevets

(19)

(11) Publication number: **0 105 671**
**A2**

(12) **EUROPEAN PATENT APPLICATION**

(21) Application number: 83305620.3

(22) Date of filing: 22.09.83

(51) Int. Cl.³: **B 60 R 13/06**

(30) Priority: 01.10.82 GB 8228153

(43) Date of publication of application:
18.04.84 Bulletin 84/16

(84) Designated Contracting States:
AT BE CH DE FR GB IT LI LU NL SE

(71) Applicant: **Russells Rubber Company Limited**
**Capewell Works Hadley**
**Telford Shropshire TF2 6QH(GB)**

(72) Inventor: **Farrant, Bryan Terence**
**The Brackens 28, Granville Avenue**
**Newport Shropshire(GB)**

(72) Inventor: **Bradley, Peter**
**21 Park Close, St. Georges**
**Telford Shropshire(GB)**

(74) Representative: **Orr, William McLean et al,**
**Haseltine Lake & Co Hazlitt House 28 Southampton**
**Buildings Chancery Lane**
**London WC2A 1AT(GB)**

(54) Vehicle window mounting.

(57) There is disclosed an elongate window-mounting strip (17) of resiliently deformable material which is adapted to be fitted along a Z-shaped edge (13) of a window aperture defined in a vehicle body. The Z-shaped edge comprises a base portion (14) having a first limb (15) at its inward end which extends in a direction into the window aperture and a second limb (16) at its outward end which extends away from the window aperture. The mounting strip (17) has a body portion (18) which lies alongside the base portion (14) of the window edge, a mounting recess (19) in one side of the body portion and extending longitudinally of the strip so as to receive the first limb (15) of the window edge to mount the strip in the window aperture, and a sealing lip (20) arranged resiliently to engage the outer surface of the second limb (16) of the window edge when the strip is mounted in the window aperture. The body portion (18) is provided with a window-receiving recess (23) in its side opposite to the side having the mounting recess (19). The arrangement of the mounting strip (17) is such that, when the first limb (15) of the window edge enters the mounting recess (19) and the window (24) enters the window-receiving recess (23), the window is "flush-mounted" in that its outer surface (25) substantially forms a prolongation of the outer surface of the second limb (16) of the window edge.

The construction of the mounting strip (17) is such that satisfactory retention of the window (24) is achieved, despite the window being mounted further outwardly than conventional window-mountings (so that there is less material of the mounting strip available to resist dislodgement of the window). Firm window retention is achieved by provision of a resiliently deformable flange portion (27) which defines one side of the window-receiving recess (23) and which extends oppositely to the sealing lip (20). A wedge-shaped portion (29) connects the flange portion (27) and the sealing lip (20) to the main body portion (18) of the mounting strip, the wedge-shaped portion (29) being operable to apply a window-gripping force to the flange portion (27) when the mounting strip is mounted in the window aperture and the window is mounted in its recess.

EP 0 105 671 A2

0105671

# VEHICLE WINDOW MOUNTING

This invention relates to the mounting of a fixed window, such as a front windscreen or rear window, in a vehicle body.

In the motor industry, it has been the practice for many years to use a rubber weatherstrip to glaze motor vehicles, but the formation of such strips has always been such that the outer surface of the window glass is inset to a considerable extent relative to the outer surface of the adjacent portions of the vehicle body surrounding the window. In order to achieve a proper fit of the window in the window aperture, and to seal it therein, weatherstrips have had to be made over 25 mm wide, which could be unsightly, in addition to providing an interruption in the smooth air flow over the outer surface of the vehicle with consequent increase in drag co-efficient, greater consumption of fuel, and generation of undesirable wind noise.

With a view to overcoming the problems of the inset mounting of windows in vehicle bodies, involving the use of weatherstrips, it has been proposed to bond the window glass directly to the metal edge of the window aperture in the vehicle body in such a position that the outer surface of the glass is substantially flush with the adjoining surface of the vehicle body.

-2-

Thereafter, it has been necessary to cover the gap between the window and the body with a small, mainly decorative, plastics or rubber trim strip.

The direct mounting of window glass in vehicle window apertures is known as direct glazing and, while the method has several advantages, it also has disadvantages in terms of cost in view of the length of time required for assembly. Furthermore, it is a difficult and expensive method to be used when the window requires replacement.

The present invention has been developed primarily with a view to enable a fixed window to be mounted in a window aperture provided in a vehicle body, via a resilient mounting strip, in such a way that the window substantially forms a continuation of the contour of the vehicle body i.e. the window is substantially flush with the adjoining portions of the body surrounding the window aperture.

According to one aspect of the invention there is provided an elongate mounting strip of resiliently deformable material which is adapted to be fitted along a Z-shaped edge of a window aperture defined in a vehicle body, the Z-shaped edge comprising a base portion and a first limb at the inward end of the base portion which extends in a direction into the window aperture and a second limb at its outward end which extends away from the window aperture, and the mounting strip having a body portion for lying along side the base portion of the window edge,

-3-

a mounting recess formed in one side of the body portion and extending longitudinally of the strip so as to receive therein the first limb of the window edge in order to mount the strip in the window aperture, and a sealing lip arranged resiliently to engage the outer surface of the second limb of the window edge when the strip is mounted in the window aperture:

in which the body portion is provided with a window-receiving recess in its side opposite to the side having said mounting recess and arranged so that, when the mounting strip is mounted in the window aperture and the window is mounted in the mounting strip, the outer surface of the window substantially forms a prolongation of the outer surface of the second limb.

Thus, the mounting strip enables a fixed window to be mounted in simple manner in a window aperture in a vehicle body, with the window being substantially flush with the adjacent portions of the vehicle body which surround the window aperture.

Usually, the window aperture will be generally rectangular, or four sided, and the Z-shaped edge formation will extend along each side of the window aperture. However, it should be understood that the mounting strip can be mounted along any one or more Z-shaped sides of a window aperture, with different means being adopted, if necessary, to mount the window along any remaining sides of the window aperture, if any of such sides should be non-Z-shaped.

Preferably, one side of the window-receiving recess is defined by a resiliently deformable flange portion which extends oppositely to the sealing lip. The flange portion and the sealing lip are connected to the body portion by means of a wedge-shaped portion which is arranged to define the base of the window-receiving recess, the wedge-shaped portion being operable to apply a window-gripping force to the flange portion when the mounting strip is mounted in the window aperture and the window is mounted in the window-receiving recess. This feature provides satisfactory retention of the window in the window-receiving recess , despite there being less material in the mounting strip available to retain the window in position than there is in conventional constructions of mounting strip in which the window is normally mounted substantially inwardly of the outer surface of the vehicle body surrounding the window aperture. By contrast, the invention provides satisfactory retention of a flush-mounted fixed vehicle window.

In the case of a front windscreen, or rear window, of a vehicle, the aperture is of composed of generally horizontal upper and lower sides, and slightly curved sides at each end of the upper and lower sides. Usually, all of these sides are formed with the Z-shaped edge formation referred to above, and a single length of mounting strip can be readily mounted in position along four sides, prior to mounting in position of the window in the window-receiving recess therein.

According to a further aspect of the invention there is provided a vehicle body having a window aperture defined therein, a resilient mounting strip mounted along the edge of the aperture, and a fixed window mounted in the strip in such a way that the outer surface of the window substantially forms a prolongation of the adjacent portions of the vehicle body which surround the window aperture.

Preferably, the vehicle body according to the further aspect of the invention is provided with a mounting strip as defined according to the first aspect of the invention.

The sealing lip on the mounting strip engages resiliently with the outer surface of the second limb of the window edge, as referred to above, and thereby enables the mounting strip to function as a weatherstrip, in that the sealing lip overlies the transition between the second limb and the base portion of the Z-shaped edge formation so as to resist entry of water between the body portion of the mounting strip and the base portion of the window edge.

In order further to resist penetration of water into this region, the body portion is preferably provided with a further sealing lip which is resiliently deformable into sealing contact with the base portion when the mounting strip is fitted in position.

The mounting strip is formed of any suitable resiliently deformable material, such as the rubber material from which weatherstrips are conventionally made. The dimensions and parameters of the mounting strip of the invention are carefully controlled in such a way as to enable the window to be mounted in the required manner i.e. substantially flush with the adjoining surfaces of the vehicle body. These dimensions and parameters are such as to enable the window to be held firmly in position without risk of becoming dislodged in service.

The mounting strip of the invention is particularly suitable for mounting front windscreens and rear windows in vehicle bodies. However, it should be understood that the invention is applicable to the mounting of other fixed windows in vehicle bodies. However, slight modification of the mounting strip is preferred, in the mounting of a fixed side window, in that vehicle manufacturers prefer the outer surface of a fixed side window to be slightly inset relative to the ajdacent contour of the vehicle body.

The invention will now be described in more detail, by way of example only, with reference to the accompanying drawings in which:-

Figure 1 is a front view of a motor vehicle in which a mounting strip according to the invention is used;

Figure 2 is a schematic illustration, in longitudinal section, of the mounting of the front windscreen and the rear window in the vehicle shown in Figure 1;

Figure 3 is a cross sectional view of a Z-shaped edge of a window aperture provided in the vehicle, with a mounting strip for a fixed window shown adjacent the window edge but prior to deformation so as to adopt the assembled position;

Figure 4 is a view, similar to Figure 3, illustrating the mounting strip after deformation to adopt the assembled position on the window edge, with a window mounted therein; and

Figure 5 is a view, similar to Figure 4, illustrating a modified embodiment of mounting strip used to mount a fixed side window in a vehicle body.

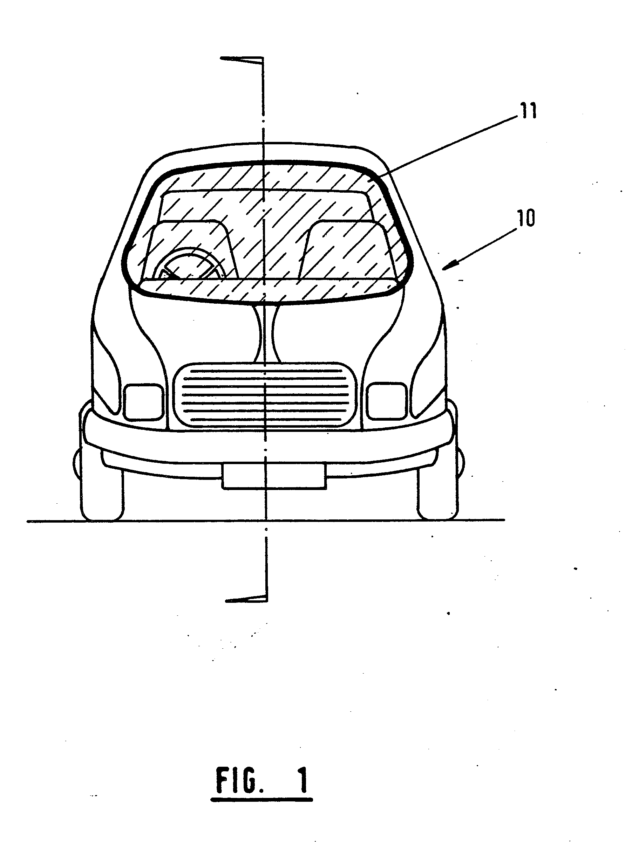

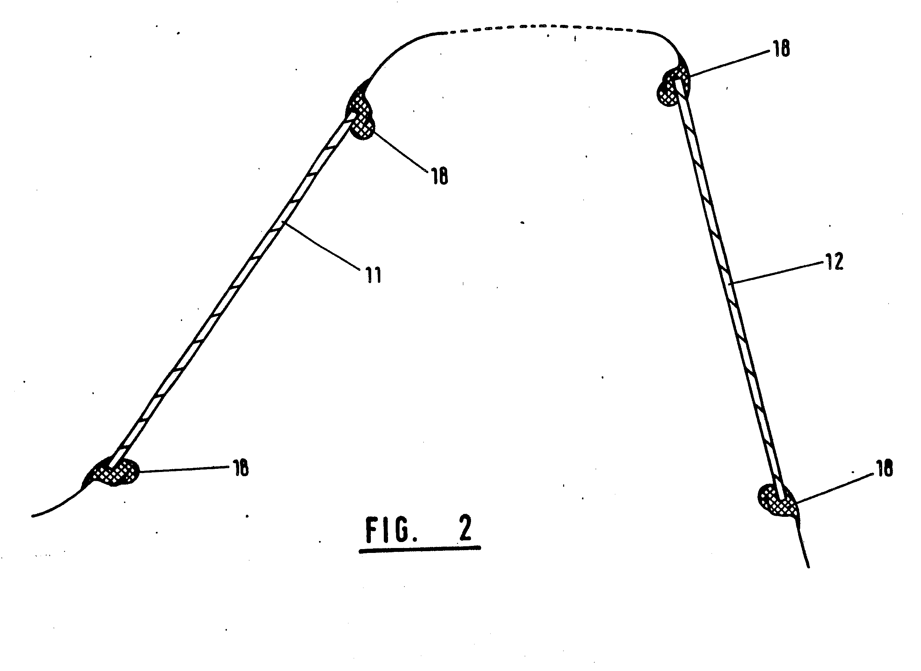

Referring to Figures 1 and 2, there is shown a motor vehicle 10 having fixed windows mounted in window apertures provided in the vehicle body, via a mounting strip which will be described in more detail below. By way of example only, the mounting in position of front windscreen 11, or rear window or backlight 12 will be described.

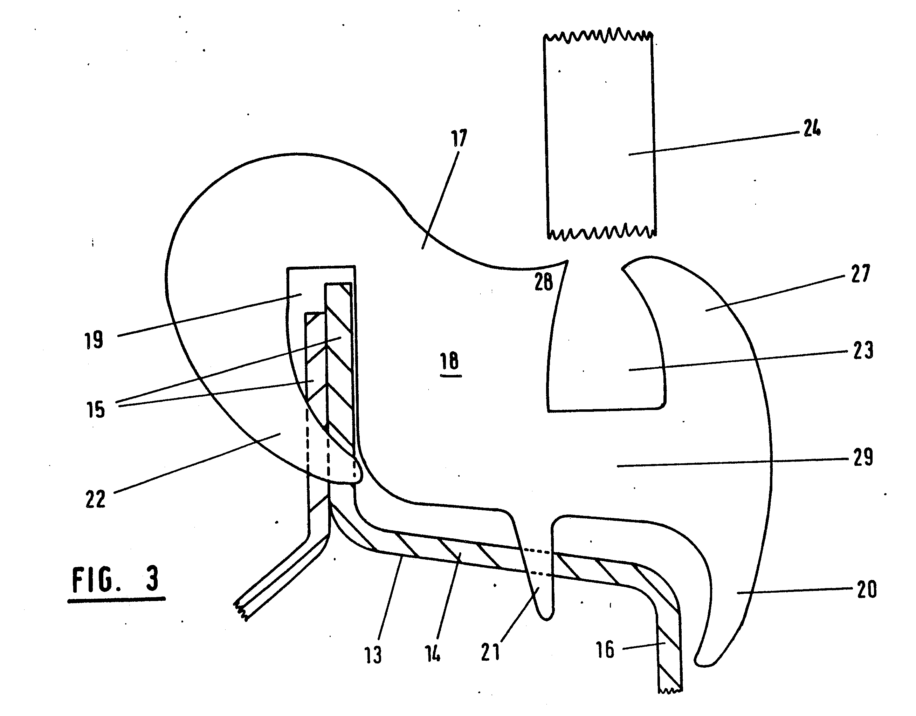

Referring to Figure 3, there is shown a cross sectional view of a Z-shaped edge 13 of a fixed window aperture, the edge 13 comprising a base portion 14 and a first limb 15 at the inward end of the base portion 14 which extends in a direction into the window aperture and a second limb 16

at its outward end which extends away from the window aperture. A Z-shaped edge formation 13 as shown in Figure 3 is of generally conventional construction, for use in mounting a front windscreen or rear window.

A mounting strip 17 is shown adjacent to the window edge 13, but prior to deformation so as to fit on the window edge 13. The mounting strip 17 comprises a weatherstrip and is made of any suitable resiliently deformable material. The strip 17 comprises a main body portion 18 which is intended to lie along side the base portion 14 of the edge 13, and a mounting recess 19 is formed in one side of the body portion 18 and extends longitudinally of the strip 17 so as to receive therein the first limb 15 of the edge 13 in order to mount the strip 17 in the window aperture.

The body portion 18 also has an outer sealing lip 20 which is arranged so as to engage resiliently with the outer surface of the second limb 16 of the window edge 13 when the strip 17 is mounted in the window aperture. Body portion 18 also has a further sealing lip 21 which is deformable into sealing contact with the adjacent surface of the base portion 14. The mounting recess 19 is defined between body portion 18 and a resiliently deformable lip 22 which is engageable with the inner surface of the first limb 15 of window edge 13.

On the side of the body portion 18 remote from the side provided with mounting recess 19 and sealing

0105671

lip 21, there is a window-receiving recess 23 in which one edge of a fixed window 24 can be received. As indicated above, the mounting strip 17 is shown in Figure 3 occupying a relaxed, non-deformed position.

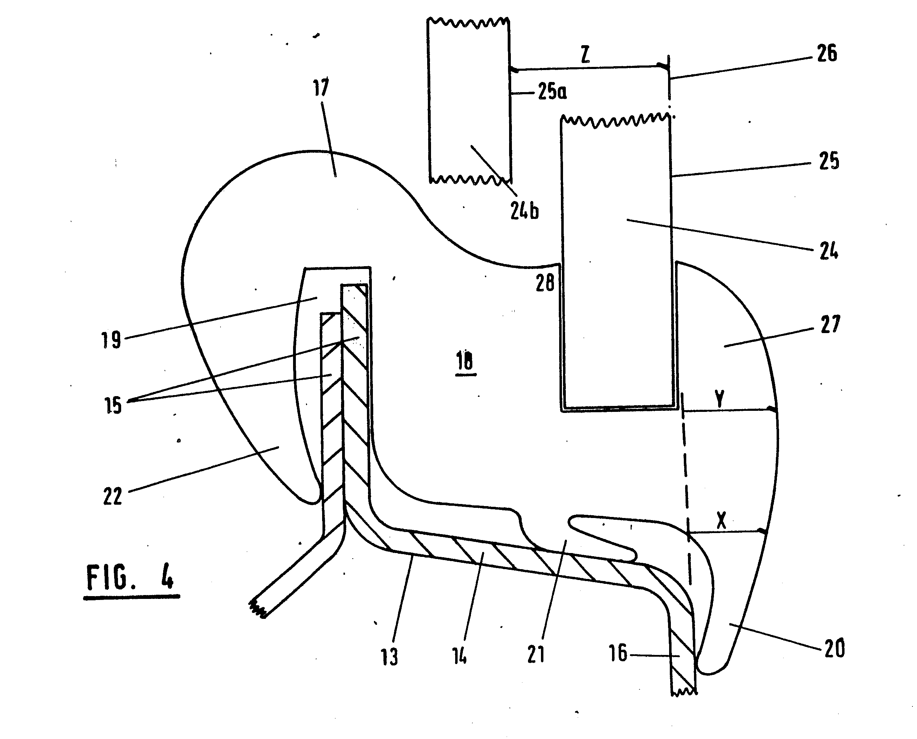

Referring now to Figure 4, the mounting strip 17 is shown occupying a resiliently deformed state, in which the mounting strip is mounted securely in position on the window edge 13, and the window 24 is mounted securely in position in the window aperture, via its edge mounting in the strip 17 in the recess 23. The lip 22 is deformed outwardly into firm sealing engagement with the inner surface of first limb 15 of edge 13, and sealing lip 20 is deformed into sealing contact with the outer surface of second limb 16 so as to overlie the transition between second limb 16 and the base portion 14 of the edge 13. This enables the mounting strip 17 to function as a weatherstrip, which resists penetration of water into the window aperture between body portion 18 and base portion 14. As a further safeguard against undue penetration of water or moisture, sealing lip 21 is deformed into sealing contact with the base portion 14, as shown in Figure 4.

There is shown, at 24b, the position which is adopted by a fixed window, such as a front windscreen, when it is mounted in a window aperture via currently available constructions of weatherstrip. However, as will be apparent from Figure 4, the window 24 is mounted in recess 23 in such a way that the outer surface 25 of window 24 substantially forms a prolongation of the outer surface of second limb 16. A dashed line 26 is shown passing along the outer surface 25 of window 24 and the outer surface of second limb 16. Further, in the deformed state of the strip 17, the root portion of sealing lip 20 is spaced by a distance $x$ from the line 26, and the root of a resiliently deformable flange portion 27 is spaced by a distance $y$ from the line 26. The flange portion 27 is resiliently deformed from the position shown in Figure 3 to the position shown in Figure 4, in order to grip the edge of the window 24 tightly within the recess 23. Further gripping of the window 24 in recess 23 is achieved by virtue of the resilient engagement provided by edge portion 28 which is deformed from the position shown in Figure 3 to that shown in Figure 4. The distances $x$ and $y$ which are shown in Figure 4 are substantially equal, to enable flush-mounting of the window 24. The distances $x$ and $y$ may vary slightly, relative to each other, but are substantially similar, whereas the distance $z$, between the outer surface 25a of conventionally mounted window 24b, and the line 26 is very much greater than $x$ or $y$.

Thus, it will be seen from Figure 4 that the conventionally mounted window 24b is located substantially midway along the base portion 14 of Z-shaped edge 13, whereas mounting strip 17 enables window 24 to be mounted substantially flush. Accordingly, the window glass, in the fitted position, is in substantially the same plane as the outer body skin of the vehicle, whereby the co-efficient of drag factor is reduced, with consequent benefit in fuel consumption and reduction in wind noise.

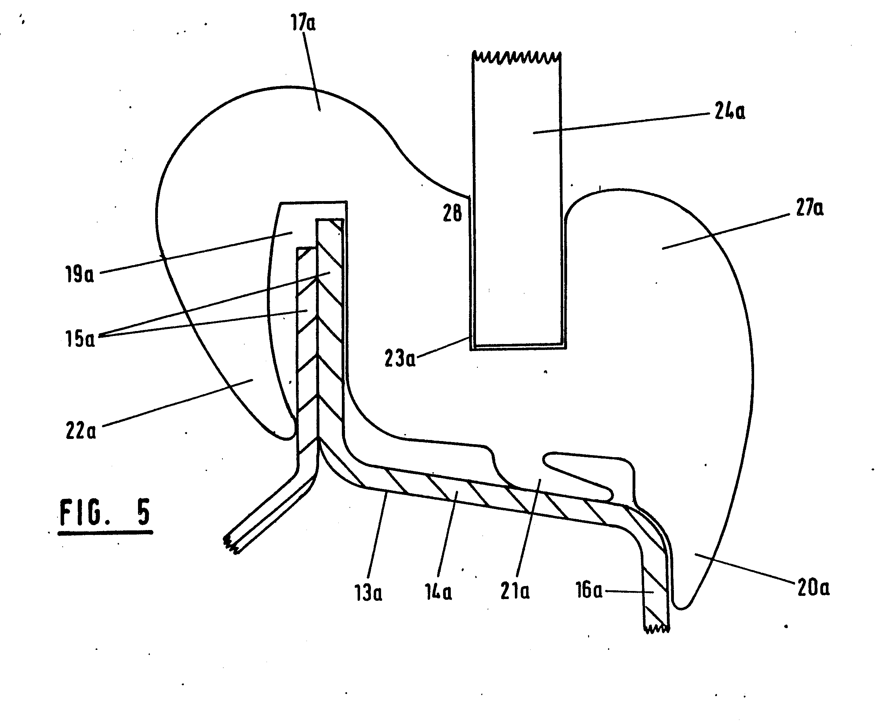

There is shown in Figure 3 and 4 the mounting in position of a front windscreen or rear window of a vehicle. However, the mounting strip according to the invention is applicable generally in the mounted of fixed windows in a vehicle, with the outer surface of the window substantially flush with the adjacent surface of the body portions surrounding the window aperture. Referring now to Figure 5, there is shown a modified mounting strip 17a, and parts corresponding with the mounting strip 17 are designated by the same reference numerals, but with the addition of the letter a.

The window 24a is slightly inset relative to the outer surface of second limb 16a, which is preferred by vehicle body manufacturers, but is nevertheless much more closely arranged to the outer contour of the vehicle body than is possible with conventionally mounted fixed side windows. Sealing lip 20a is differently constructed from sealing lip 20, and flange portion 27a also is different from flange portion 27. As will be seen in Figure 5, sealing lip 20a engages both with the outer surface of the second limb 16a, but also continuously up to the transition between second limb 16a and the base portion 14a. Indeed, there is sealing contact even along a part of of the adjacent surface of base portion 14a.

The parameters and dimensions of mounting strip 17 (and 17a) are such that a fixed window can be held with the necessary rigidity within a window aperture, despite the fact that the window is located further outwardly along the base portion 14 of the window edge than is the case with fixed windows which are mounted in position by means of conventional constructions of weatherstrip.

There are two factors in the design of the window mounting strip which are considered to contribute to a major extent towards the satisfactory retention of the window edge in the recess or channel 23, despite there being much less bulk material between the (flush-mounted) window edge and the outer side of the mounting strip 18 than there is in the known construction of inset-mounted window. Firstly, a bridge portion 29 (see Figure 3) below the channel 23 is slightly wedge shaped i.e. it tapers as it approaches the outer side of the strip which is provided with lip 20 and flange portion 27. Secondly, the mounting strip is made of sufficient resiliency (preferably slightly greater than the resiliency of conventional weather strips) so that the bridge portion 29 can react with a sufficient force between the base portion 14 of the window edge 13 and the flange portion 27. Thus, these two features serve to apply a substantial inward window-gripping force to the flange portion 27, when the latter has been deformed so as to allow entry of the window into channel 23. This gripping force enables a flush-mounted window to be held satisfactorily by the mounting strip 18 e.g. in a manner as good as the retention of an inset-mounted window in a conventional weather strip.

**0105671**

## CLAIMS

1.       An elongate window-mounting strip (17) of resiliently deformable material which is adapted to be fitted along a Z-shaped edge (13) of a window-aperture defined in a vehicle body, the Z-shaped edge (13) comprising a base portion (14) and a first limb (15) at the inward end of the base portion which extends in a direction into the window aperture and a second limb (16) at its outward end which extends away from the window aperture, and the mounting strip (17) having a body portion (18) for lying alongside the base portion (14) of the window edge, a mounting recess (19) in one side of the base portion and extending longitudinally of the strip so as to receive therein the first limb (15) of the window edge in order to mount the strip in the window aperture, and a sealing lip (20) arranged resiliently to engage the outer surface of the second limb (16) of the window edge when the strip is mounted in the window aperture :

        characterised in that the body portion (18) is provided with a window-receiving recess (23) in its side opposite to the side having said mounting recess (19) and arranged so that, when the mounting strip (17) is mounted in the window aperture and the window (24) is mounted in the mounting strip, the outer surface (25) of the window (24) substantially forms a prolongation of the outer surface of said second limb (16).

2.       A window-mounting strip according to claim 1, characterised in that a resiliently deformable flange portion (27) defines one side of the window-receiving recess (23) and extends oppositely to said sealing lip (20), and said flange portion (27) and said sealing lip (20) are connected to the body portion (18) by means of a wedge-shaped portion (29) arranged to define the base of the window-receiving recess (23), said wedge-shaped portion (29) being operable to apply a window-gripping force to the flange portion (27) when the mounting strip is mounted in the window aperture and the window (24) is mounted in the window-receiving recess (23).

3. A window-mounting strip according to claim 1 or 2, characterised in that a further sealing lip (21) is provided on said one side of the body portion (18) to make sealing contact with the base portion (14) of the window edge (13).

4. A window-mounting strip according to any one of claims 1 to 3, characterised in that one side of said mounting recess (19) is defined by a deformable lip (22) which is engageable with the inner surface of the first limb (15) of the window edge.

5. A vehicle body having a window aperture defined therein, a resilient mounting strip (17) mounted along the edge (13) of the aperture, and a fixed window (24) mounted in the strip (17), characterised in that the outer surface (25) of the window (24) substantially forms a prolongation of the adjacent portions (16) of the vehicle body which surround the window aperture.

6. A vehicle body according to claim 5, characterised in that a resilient sealing lip (20) is arranged to engage the outer surface (16) of the vehicle body surrounding the window aperture.

7. A vehicle body according to claim 6, including a Z-shaped window edge (13) defining the window aperture and comprising a base portion (14) having a first limb (15) at its inward end which extends in a direction into the window aperture and a second limb (16) at its outer end which extends away from the window aperture, characterised in that the sealing lip (20) overlies the transition between the second limb (16) and the base portion (14) of the window edge so that the mounting strip (17) functions also as a weather strip.

8. A vehicle body according to claim 6 or 7, characterised in that a window-receiving recess (23) is provided in the resilient mounting strip (17) and has one side defined by a resiliently deformable flange portion (27) which extends oppositely to said sealing lip (20), and in that said flange portion (27) and said sealing lip (20) are connected to the mounting strip (17) by means of a wedge-shaped portion (29) arranged to define the base of the window-receiving recess (23), said wedge-shaped portion (29) applying a window-gripping force to the flange portion (27).

9. A vehicle body according to any one of claims 5 to 7, characterised in that the fixed window is a front windscreen (11), a rear window (12) or a side window (24a).

FIG. 1

FIG. 2

FIG. 3

-3/5-

0105671

FIG. 4

0105671

FIG. 5

17a

24a

27a

28

19a

23a

15a

22a

13a  14a  21a  16a  20a

0105671